# EUROPÄISCHE PATENTSCHRIFT

(11) **EP 1 878 634 B1**
(45) Veröffentlichungstag und Bekanntmachung des Hinweises auf die Patenterteilung: **05.12.2012**
(21) Anmeldenummer: 07011925.0
(22) Anmeldetag: 19.06.2007
(51) Int. Cl.: B62B 5/00, B62B 5/02

(54) **Transporteinrichtung**
Transport device
Dispositif de transport

(30) Priorität: 11.07.2006 DE 202006010675 U
(43) Veröffentlichungstag der Anmeldung: 16.01.2008
(73) Patentinhaber: AAT Alber Antriebstechnik GmbH, 72458 Albstadt (DE)
(72) Erfinder:
(74) Vertreter: Kohler Schmid Möbus

(56) Entgegenhaltungen:
- AU-B2- 767 198
- DE-A1- 3 538 432
- US-A- 4 457 527
- US-A1- 2003 197 340

## Beschreibung

Die Erfindung betrifft eine Transporteinrichtung mit einer durch einen Antrieb angetriebenen Treppensteigeinrichtung.

In vielen mit Treppen versehenen Bauten sind keine Fahrstühle vorgesehen, mit deren Hilfe Lasten vom unteren Teil des Hauses in den oberen Teil verbracht werden können. In vielen Fällen müssen daher die Lasten, wie beispielsweise Getränkekisten, getragen werden. Auf das Tragen der Lasten muss umso größere Mühe verwendet werden, wenn diese Lasten zerbrechlich sind und deswegen schwer transportiert werden können. Weiterhin ist es wünschenswert, Rollstühle so auszugestalten, dass sie zum Befahren einer Treppe geeignet sind. Deshalb ist es bekannt, Transporteinrichtungen, wie zum Beispiel Sackkarren oder Rollstühle, mit Treppensteigeinrichtungen zu versehen.

Aus der US 4,457,527 A ist eine Transporteinrichtung zum Transport von Werkzeugen bekannt. Diese Transporteinrichtung verfügt weder über eine Treppensteigeinrichtung noch über einen eigenen Antrieb.

Die US 2003/197340 A1 offenbart eine mobile Lagereinrichtung, deren Räder LEDs aufweisen können.

Die gattungsgemäße DE 35 38 432 A1 offenbart einen Rollstuhl, der eine Treppensteigeinrichtung aufweist. Außerdem kann der Rollstuhl eine Beleuchtung aufweisen.

Die AU 767198 B2 offenbart einen Treppenlift, der über einen Sensor verfügt, der die Annäherung einer Person detektieren kann und in Abhängigkeit davon eine Beleuchtung ansteuert.

Probleme und insbesondere auch Gefährdungssituationen ergeben sich, wenn ein Benutzer sich mit einer derartigen Transporteinrichtung in einem Treppenhaus befindet und das Licht ausgeht oder nachts eine dunkle Außentreppe befahren werden soll.

Aufgabe der vorigen Erfindung ist es, diesbezüglich Abhilfe zu schaffen.

Erfindungsgemäß wird diese Aufgabe auf ebenso überraschende wie einfache Art und Weise durch eine Transporteinrichtung mit den Merkmalen des Anspruchs 1 gelöst. Durch diese Maßnahme wird ein Benutzer unabhängig von beispielsweise einer Treppenhausbeleuchtung und einer Außenbeleuchtung an einem Haus. Insbesondere kann ein Benutzer ohne Unterbrechung weiterarbeiten, ohne eine Treppenbeleuchtung, die in Mehrfamilienhäusern häufig zeitgesteuert ist, zwischendurch einschalten zu müssen. Die Transporteinrichtung ist auch bei Dunkelheit sicher verwendbar. Die Transporteinrichtung kann ähnlich einer Sackkarre zum Transport von Lasten oder auch als Rollstuhl ausgebildet sein.

Besonders vorteilhaft ist es, wenn ein oder mehrere Leuchtmittel auf den Bereich vor und/oder hinter der Transporteinrichtung ausgerichtet sind. Eine Ausleuchtung des Bereichs vor der Transporteinrichtung ermöglicht es einem Benutzer, die zu befahrende Treppe zu sehen und mögliche Hindernisse zu erkennen. Auch für einen Rollstuhlfahrer kann es vorteilhaft sein, wenn der Bereich vor dem Rollstuhl ausgeleuchtet wird, falls er aus einem bestimmten Grund den Rollstuhl verlassen will. Beim Lastentransport ist es vorteilhaft, wenn der Bereich hinter der Transporteinrichtung und somit der Standbereich eines Benutzers ausgeleuchtet wird. Zusätzlich kann der Bereich vor der Transporteinrichtung beleuchtet werden. Die Unfallgefahr kann dadurch verringert werden.

Als Treppensteigeinrichtung ist eine Steigeinheit oder Laufräder vorgesehen und ein oder mehrere Leuchtmittel sind auf die Steigeinheit bzw. die Laufräder ausgerichtet.

Bei einer besonders bevorzugten Ausführungsform kann eine netzunabhängige Stromversorgung vorgesehen sein. Beispielsweise können die Leuchtmittel batterie- oder akkubetrieben sein. Dabei können die Leuchtmittel an den Akku der Treppensteigeinrichtung angeschlossen und über diesen mit Strom versorgt werden oder es kann ein separater Akku für die Leuchtmittel vorgesehen sein, so dass der Akku der Treppensteigeinrichtung durch die Leuchtmittel nicht belastet wird.

Vorzugsweise sind das oder die Leuchtmittel als LED ausgebildet. LEDs haben eine lange Lebensdauer und einen geringen Energieverbrauch.

Die Leuchtmittel leuchten im Betrieb der Transporteinrichtung ständig. Dadurch ist eine hinreichende Beleuchtung des Bereichs um die Transporteinrichtung ständig gewährleistet.

Es kann auch vorgesehen sein, dass das oder die Leuchtmittel bei Aktivierung des Antriebs automatisch einschaltbar sind. Dies bedeutet, dass die Leuchtmittel nur in Betrieb sind, wenn die Transporteinrichtung auch tatsächlich bewegt wird. Im Stillstand kann Energie gespart werden, indem die Leuchtmittel automatisch abgeschaltet werden.

Wenn eine Fokussiereinrichtung zur Fokussierung der Lichtstrahls des oder der Leuchtmittel vorgesehen ist, kann gezielt ein bestimmter Bereich ausgeleuchtet werden, beispielsweise der Standbereich eines Benutzers.

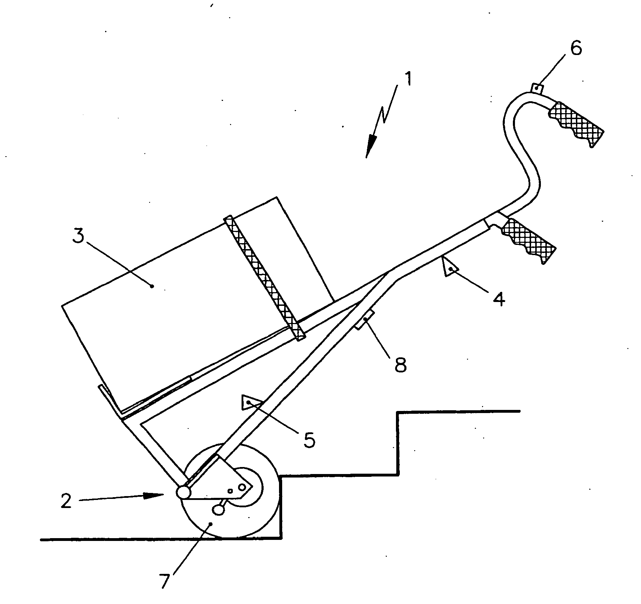

Weitere Merkmale und Vorteile der Erfindung ergeben sich aus der nachfolgenden Beschreibung eines Ausführungsbeispiels der Erfindung, anhand der Figur der Zeichnung und aus den Ansprüchen.

Ein Ausführungsbeispiel ist in der schematischen Zeichnung dargestellt und wird in der nachfolgenden Beschreibung erläutert.

Die einzige Figur zeigt eine schematische Darstellung einer Transporteinrichtung 1, die eine Treppensteigeinrichtung 2 aufweist. Die Treppensteigeinrichtung 2 ist durch einen nicht dargestellten Antrieb antreibbar und weist Laufräder 7 auf. Die gezeigte Transporteinrichtung 1 ist zum Transport von Lasten 3 geeignet und ausgebildet. Ein erstes als LED ausgebildetes Leuchtmittel 4 ist zur Ausleuchtung des Standbereichs eines Benutzers vorgesehen und ausgerichtet. Somit wird der hintere Bereich der Transporteinrichtung 1 ausgeleuchtet. Ein zweites als LED ausgebildetes Leuchtmittel 5 ist zur Ausleuchtung des Bereichs vor der Transporteinrichtung 1 vorgesehen und ausgerichtet. Es ist vorgesehen, dass die Leuchtmittel 4, 5 während des Betriebs ständig eingeschaltet sind. Ein manuelles An - und Ausschalten ist jedoch durch den Schalter 6 möglich. Dieser ist vorzugsweise im Griffbereich der Transporteinrichtung 1 angeordnet, so dass er für einen Benutzer einfach zugänglich ist. Eine als Akku ausgebildete Stromversorgung 8 für die Leuchtmittel 4, 5 ist ebenfalls vorgesehen. Im Bereich der Leuchtmittel 4, 5 kann jeweils eine Fokussiereinrichtung zur Fokussierung des Lichtstrahls vorgesehen sein.

## Patentansprüche

1. Transporteinrichtung (1) mit einer durch einen Antrieb angetriebenen Treppensteigeinrichtung (2), wobei eine Steigeinheit oder Laufräder (7) vorgesehen sind, mit einem oder mehreren Leuchtmitteln (4, 5), **dadurch gekennzeichnet, dass** die Leuchtmittel (4, 5) im Betrieb der Transporteinrichtung (1) ständig leuchten und ein oder mehrere Leuchtmittel (4, 5) auf die Steigeinheit bzw. die Laufräder (7) ausgerichtet sind.

2. Transporteinrichtung nach Anspruch 1, **dadurch gekennzeichnet, dass** ein oder mehrere Leuchtmittel (4, 5) auf den Bereich vor und/oder hinter der Transporteinrichtung (1) ausgerichtet sind.

3. Transporteinrichtung nach einem der vorhergehenden Ansprüche, **dadurch gekennzeichnet, dass** eine netzunabhängige Stromversorgung (8) vorgesehen ist.

4. Transporteinrichtung nach einem der vorhergehenden Ansprüche, **dadurch gekennzeichnet, dass** das oder die Leuchtmittel (4, 5) als LED ausgebildet sind.

5. Transporteinrichtung nach einem der vorhergehenden Ansprüche, **dadurch gekennzeichnet, dass** das oder die Leuchtmittel (4, 5) bei Aktivierung des Antriebs automatisch einschaltbar sind.

6. Transporteinrichtung nach einem der vorhergehenden Ansprüche, **dadurch gekennzeichnet, dass** eine Fokussiereinrichtung zur Fokussierung des Lichtstrahls oder der Leuchtmittel vorgesehen ist.

## Claims

1. Transport device (1) with a step climbing device (2) driven by a drive, possessing a climbing unit or running wheels (7) and equipped with one or more light sources (4, 5), **characterised in that** the light sources (4, 5) are permanently illuminated when the transport device (1) is in operation and one or more light sources (4, 5) are directed on the climbing unit or running wheels (7).

2. Transport device according to claim 1, **characterised in that** one or more light sources (4, 5) are directed onto the area in front of and/or behind the transport device (1).

3. Transport device according to one of the preceding claims, **characterised in that** a mains-independent power supply (8) is provided.

4. Transport device according to one of the preceding claims, **characterised in that** the light source(s) (4, 5) are in the form of LEDs.

5. Transport device according to one of the preceding claims, **characterised in that** the light source(s) (4, 5) can be switched on automatically when the drive is activated.

6. Transport device according to one of the preceding claims, **characterised in that** a focusing device is provided in order to focus the light beam or the light sources.

## Revendications

1. Dispositif de transport (1) comprenant un dispositif (2) pour gravir des escaliers entraîné par une commande, dans lequel il est prévu une unité de montée ou des roues porteuses (7), avec une ou plusieurs moyens d'éclairage (4, 5), **caractérisé en ce que** les moyens d'éclairage (4, 5) éclairent en permanence au cours du fonctionnement du dispositif de transport (1) et un ou plusieurs moyens d'éclairage (4, 5) est ou sont alignés sur l'unité de montée ou sur les roues porteuses (7).

2. Dispositif de transport selon la revendication 1, **caractérisé en ce qu'**un ou plusieurs moyens d'éclairage (4, 5) est ou sont alignés sur la zone située devant et/ou derrière le dispositif de transport (1).

3. Dispositif de transport selon l'une quelconque des revendications précédentes, **caractérisé en ce qu'**il est prévu une alimentation en courant (8) dépendant d'un réseau.

4. Dispositif de transport selon l'une quelconque des revendications précédentes, **caractérisé en ce que** le ou les moyens d'éclairage (4, 5) se présente(nt) sous la forme de DEL.

5. Dispositif de transport selon l'une quelconque des revendications précédentes, **caractérisé en ce que** le ou les moyens d'éclairage (4, 5) peut ou peuvent s'enclencher automatiquement lors de l'activation de la commande.

6. Dispositif de transport selon l'une quelconque des revendications précédentes, **caractérisé en ce qu'**il est prévu un dispositif de focalisation pour focaliser le rayon lumineux ou le moyen d'éclairage.
